# EUROPÄISCHE PATENTSCHRIFT

(11) **EP 3 718 872 B1**
(45) Veröffentlichungstag und Bekanntmachung des Hinweises auf die Patenterteilung: **16.08.2023**
(21) Anmeldenummer: 20166168.3
(22) Anmeldetag: 27.03.2020
(51) Int. Cl.: B62K 21/22, B62K 21/24, B62K 19/32

(54) **FAHRZEUG, INSBESONDERE ZWEIRADFAHRZEUG, UND LENKERVORBAU-EINHEIT**
VEHICLE, ESPECIALLY TWO-WHEEL VEHICLE, AND STEERING FRONT UNIT
VÉHICULE, EN PARTICULIER VÉHICULE À DEUX ROUES ET UNITÉ DE POTENCE DE GUIDON

(30) Priorität: 05.04.2019 DE 202019101979 U; 18.07.2019 DE 102019119565; 10.01.2020 DE 202020100114 U
(43) Veröffentlichungstag der Anmeldung: 07.10.2020
(73) Patentinhaber: ZEG Zweirad-Einkaufs-Genossenschaft eG, 50739 Köln (DE)
(72) Erfinder: Honkomp, Georg, 53227 Bonn (DE)
(74) Vertreter: Patentanwälte Buschhoff Hennicke Althaus

(56) Entgegenhaltungen:
- WO-A1-2013/131254
- GB-A- 2 466 955
- TW-U- M 561 637
- US-A- 4 260 171

## Beschreibung

Die Erfindung betrifft auf eine Lenkervorbau-Einheit für ein einen Fahrzeugrahmen mit einem Steuerrohr sowie eine ein Fahrzeugrad tragende Radgabel aufweisendes Fahrzeug, bei dem ein Gabelschaft der Radgabel in dem Steuerrohr drehbar gelagert ist und an seinem vom Fahrzeugrad abgewandten Ende eine Einstecköffnung zur Aufnahme eines an der Lenkervorbau-Einheit angeordneten Einsteckrohrs bildet. Die Erfindung ist ferner auf ein Fahrzeug, insbesondere ein Zweiradfahrzeug gerichtet, mit einem an einem Fahrzeugrahmen angeordneten Steuerrohr und einer einen Gabelschaft aufweisenden, ein Fahrzeugrad aufnehmenden Radgabel, wobei der Gabelschaft in dem Steuerrohr drehbar gelagert aufgenommen ist und an seinem vom Fahrzeugrad abgewandten Ende eine Einstecköffnung zur Aufnahme eines an der Lenkervorbau-Einheit angeordneten Einsteckrohrs bildet.

Klassische Beispiele für Fahrzeuge der gattungsgemäßen Art sind insbesondere zweirädrige Fahrräder, bei denen die vorgenannten Merkmale die Lenkbarkeit des Fahrzeugvorderrads gewährleistet. Das Einsteckrohr der Lenkervorbau-Einheit ist von oben in die Einstecköffnung des Gabelschafts eingeführt und in diesem gegen Verdrehen und unbeabsichtigtem axialen Verstellen so gesichert, dass sich ein am oberen, aus dem Gabelschaft herausragenden Ende der Vorbaueinheit montierter Lenker für den Fahrer des Fahrzeugs in korrekter Höhe sowie im gewünschten, rechten Winkel zur Fahrzeuglängsrichtung (bei Geradeausfahrt) befindet.

Die Sicherung des Einsteckrohrs im Inneren des Gabelschafts kann bei bekannten Fahrrädern o.dgl. gemäß einer schon sehr alten Konstruktionsweise mittels eines am unteren Ende des Einsteckrohrs vorgesehenen Klemmkonus erfolgen, der mit einer das Einsteckrohr über seine gesamte Länge durchsetzenden Klemmschraube in Richtung auf das obere Ende des Lenkervorbaus angestellt werden kann und dabei zu einer Verklemmung des unteren Endes des Einsteckrohrs gegenüber dem dieses umgebenden Gabelschafts führt. Diese Klemmverbindung zwischen Gabelschaft und Einsteckrohr, die die Lenkervorbau-Einheit sowohl gegen Verdrehen im Gabelschaft als auch gegen eine Axialbeweglichkeit in diesem sichert, hat sich als nicht besonders stabil erwiesen, insbesondere bei Fahrzeugen, die im Lenk- und Steuerbereich stark beansprucht werden, wie dies beispielsweise bei Mountainbikes der Fall ist, die häufig im Offroad-Bereich eingesetzt werden.

Eine bessere Stabilität der Verbindung zwischen dem Gabelschaft der Radgabel und der Lenkervorbau-Einheit bietet das Ahead-Set-System, bei dem der Vorbau mit Außenklemmung am Außenumfang des Gabelschafts in korrekter Ausrichtung angeklemmt wird, wobei der Gabelschaft zu diesem Zweck mindestens so weit oben aus dem Steuerrohr des Fahrzeugrahmens herausragt, dass die am Vorbau ausgebildete Klemmmanschette nahezu über ihre gesamte Höhe von dem oberen Gabelschaftende durchsetzt ist. Eine Einstellung der korrekten Höhe des Lenkers erfolgt im Allgemeinen dadurch, dass beim Zusammenbau des Rades der Gabelschaft zunächst deutlich über das obere Ende des Steuerrohrs hinaussteht und nach Festlegung der gewünschten Höhenposition des Lenkers der Lenkervorbau in entsprechender Position am Steuerrohr angeklemmt wird, wobei Distanzringe unterhalb des Lenkervorbaus vorgesehen werden können, um diesen auch in einer Höhenposition montieren zu können, die sich ein Stück oberhalb des oberen Endes des Steuerrohrs bzw. des darin aufgenommenen Steuersatzlagers befindet. Ein etwa dann noch oben aus dem Lenkervorbau herausragendes Teilstück des Gabelschafts wird dann abgeschnitten, denn für die endgültige, korrekte Montage des Vorbaus muss der Gabelschaft ein kleines Stück unterhalb des oberen Rands der Klemmmanschette am Lenkervorbau enden. Eine nachträgliche Anpassung der Höhenlage des Lenkervorbaus ist dann nur noch sehr eingeschränkt möglich, tatsächlich kann der Vorbau allenfalls noch tiefer montiert werden, wobei hierzu der Gabelschaft weiter gekürzt werden muss. Es ist insbesondere nicht möglich, die Höhenlage des Lenkervorbaus nur temporär zu verändern, was aber von vielen Radfahrern gewünscht wird, um die Sitzposition optimal an verschiedene Einsatzbereiche ihres Fahrrades anpassen zu können.

Aus der EP 834 447 A2 ist eine Klemmvorrichtung für die Montage einer Lenker-Gabelbaugruppe am Rahmen eines Fahrzeugs bekannt, bei der ein Klemmstück zum Einsatz kommt, das einen Klemmabschnitt für die Herstellung einer Klemmverbindung zwischen dem Gabelschaft und einem in diesen eingesteckten Einsteckrohr einer Lenkervorbau-Einheit umfasst, wobei sich das Klemmstück am oberen, oben aus dem Steuerrohr herausragenden Ende des Gabelschafts befindet. Die bekannte Klemmvorrichtung verklemmt also den Gabelschaft und das darin eingesteckte Einsteckrohr am oberen, aus dem Steuerrohr herausragenden und damit frei zugänglichen Ende des Gabelschafts, wozu es mit einem Exzenter-Schnellspannverschluss ausgestattet ist. Dessen Betätigungshebel lässt sich vom Benutzer des Rades leicht öffnen, womit die Klemmverbindung gelöst und die Höhenlage des Einsteckrohrs im Gabelschaft einfach und schnell verändert werden kann. Bei der bekannten Konstruktion ist der Durchmesser des Einsteckrohrs an den Innenquerschnitt von herkömmlichen Klemmvorbauten des Ahead-Set-Systems angepasst und beträgt somit nicht mehr als 1 1/8" oder 1 1/4", womit die Konstruktion insbesondere bei voll ausgezogenem Einsteckrohr nicht besonders stabil ist. Darüber hinaus hat der am Einsteckrohr angeklemmte Vorbau nach unten keinen definierten Tiefenanschlag und kann daher bei nicht ausreichend großer Klemmkraft bei starken Belastungen nach unten entlang des Einsteckrohrs verrutschen.

Die GB 2 466 955 A offenbart ein Fahrzeug mit einer Lenkervorbau-Einheit mit allen Merkmalen des Oberbegriffs des unabhängigen Anspruchs 1, bei dem das Einsteckrohr in den Gabelschaft in dessen oben offene Einstecköffnung eingeführt ist, wie dies auch bei der vorliegenden Erfindung vorgesehen ist. Das Einsteckrohr hat dabei über seine gesamte Länge einen einheitlichen, gleichbleibenden Außendurchmesser.

Aufgabe der Erfindung ist es, eine Lenkervorbau-Einheit zu schaffen, die sich für ein gattungsgemäßes Fahrzeug, insbesondere ein Fahrrad oder anderes Zwei- oder Dreiradfahrzeug eignet und mit der die Stabilität der Verbindung zwischen dem Gabelschaft und dem darin aufgenommenen Einsteckrohr verbessert ist.

Diese Aufgabe wird mit der Erfindung durch eine Lenkervorbau-Einheit mit den Merkmalen des Anspruchs 1 sowie ein Fahrzeug gemäß Anspruch 5 gelöst. Vorteilhafte Weiterbildungen der Erfindung sind Gegenstand der Unteransprüche.

Die erfindungsgenmäße Lösung führt zu einer Gestaltung, mit der man zum einen optisch einen stufenlosen Übergang zwischen dem Einsteckbereich mit dem größeren Durchmesser des Einsteckrohrs und dem sich auf der Abstufung abstützenden Distanzring bzw. der Klemmschelle des Vorbaus erhält, zum anderen die größere Stabilität eines Einsteckrohrs mit größerem Querschnitt auch mit herkömmlichen Klemmvorbauten vorteilhaft nutzen kann, die einen Klemmquerschnitt von vergleichsweise geringem Durchmesser haben, wie er bei der Erfindung nur in dem oberen Klemmbereich, also dem obersten Abschnitt des Einsteckrohrs vorgesehen ist.

In vorteilhafter Weiterbildung der Erfindung kann bei dem erfindungsgemäßen Fahrzeug die Anordnung so getroffen sein, dass der Gabelschaft ein äußeres Gabelschaftrohr und einen in dessen Inneren im Wesentlichen konzentrisch angeordneten Stützschaft aufweist, der an den Innenquerschnitt des Einsteckrohrs angepasst ist und in dieses abstützend einfasst. Damit wird die Stabilität weiter verbessert, indem das Einsteckrohr einen sich zwischen dem inneren Stützschaft und dem äußeren Gabelschaftrohr ausbildenden Ringspalt ausfüllt, also sowohl an seinem Außenumfang von dem Gabelschaftrohr als auch (vor allem) an seinem Innenumfang von dem Stützschaft abgestützt wird. Diese Abstützung innen und außen verbessert die Stabilität der Verbindung zwischen den beiden Bauteilen außerordentlich, und zwar auch dann, wenn das Einsteckrohr nur wenig tief in den Gabelschaft eingesteckt ist, denn durch den auch schon dann innen in das Einsteckrohr einfassende Stützschaft, der in vorteilhafter Weise am radseitigen (unteren) Ende des Gabelschafts konzentrisch zum äußeren Gabelschaftrohr festgelegt ist, erhält das Einsteckrohr eine stabile Abstützung an mindestens zwei Lagerpunkten unten und oben am Gabelschaft.

Der Stützschaft kann in besonders vorteilhafter Ausgestaltung der Erfindung an dem dem Fahrzeugrad zugewandten (also normalerweise: unteren) Ende des Gabelschafts konzentrisch festgelegt sein. Die Anordnung ist bevorzugt dann so getroffen, dass der Stützschaft mit einer Klemmeinrichtung konzentrisch an der Innenwandung des Gabelschaftrohrs festgelegt ist. Die Klemmeinrichtung kann hierzu einen radial aufweitbaren Klemmring aufweisen, der zwischen zwei konischen Kegelflächen zweier Klemmbacken angeordnet ist und von diesen radial aufgeweitet und von innen an die Innenwandung des Gabelschafts gepresst wird, wenn die beiden Klemmbacken gegeneinander mittels einer Spannschraube angestellt werden. Hierzu ist die eine der beiden Klemmbacken fest am unteren Ende des Stützschafts angeordnet, beispielsweise als Klemmbackenstopfen in den als Rohr ausgestalteten Stützschaft eingeklebt, eingeschweißt oder mit einer Presspassung eingepresst, und mit einem Gewinde versehen, in das die durch die zweite Klemmbacke fassende Klemmschraube eingeschraubt wird, um die zweite Klemmbacke in Richtung auf die erste Klemmbacke anzustellen.

Die Länge des Stützschafts wird vorzugsweise möglichst groß gewählt. Sie kann also insbesondere an die Länge des Gabelschafts angepasst sein, wobei es sich zur Vereinfachung der Montage des Einsteckrohres im Gabelschaft als vorteilhaft erwiesen hat, wenn der Stützschaft ein kleines Stück über das dem Fahrzeugrad abgewandte (als im Allgemeinen: obere) Ende des Gabelschafts vorsteht, also insbesondere nach oben aus diesem herausragt. Der Stützschaft kann wenigstens über einen Teil seiner in das Einsteckrohr einfassenden Länge einen außen unrunden Querschnitt aufweisen, wobei das Einsteckrohr mit seinem Innenquerschnitt an den außen unrunden Querschnitt des Stützschafts angepasst ist. Durch diese Konstruktion ist sichergestellt, dass das in den Gabelschaft eingesteckte Einsteckrohr aufgrund des unrunden Querschnitts des Stützschafts und des daran angepassten Innenquerschnitts des Einsteckrohrs auch eine Führung in Umfangsrichtung erfährt, sich also auch nach Lösen einer für die Arretierung dienenden Befestigungseinrichtung nicht aus seiner korrekten Ausrichtung verdrehen lässt. In praktischer Ausgestaltung kann das Stützrohr dabei mit mindestens einer an seiner Außenseite vorgesehenen, sich in Axialrichtung erstreckenden Führungsnut oder Führungsfläche versehen sein, die mit einem im Inneren des Einsteckrohrs an dessen Innenquerschnitt ausgebildeten Gleitnocken oder einer Gleitfläche zusammenwirkt. Der in die Führungsnut einfassende Gleitnocken verhindert ein Verdrehen des Einsteckrohrs um den Stützschaft in ähnlicher Weise wie eine ebene Gleitfläche, die mit einer entsprechend planen Führungsfläche zusammenwirkt.

Die erfindungsgemäße Ausgestaltung erlaubt es in besonders vorteilhafter Weise, dass der Lenkervorbau mit seinem Einsteckrohr höhenverstellbar in dem Gabelschaft angeordnet ist, wobei er mittels einer vorzugsweise im Bereich der Einstecköffnung betätigbaren Verriegelungseinrichtung in verschiedenen Einsteckpositionen im Gabelschaft festgelegt werden kann. Die Verriegelungseinrichtung kann hierzu einen vorzugsweise hebelbetätigten Schnellspannverschluss sowie ein von diesem beaufschlagtes Klemmorgan aufweisen, das in einer Klemmposition den Gabelschaft mit dem in diesem eingesteckten Einsteckrohr radial gegeneinander verklemmt.

Es ist vorteilhaft, wenn der Gabelschaft bzw. das äußere Gabelschaftrohr einen möglichst großen Innendurchmesser aufweist, so dass dann das Einsteckrohr mit seinem Einsteckbereich, der konzentrisch im Inneren des Gabelschafts angeordnet ist, entsprechend groß dimensioniert sein kann, um auch im ausgezogenen Zustand ausreichend stabil gegen Biege- und Torsionsbeanspruchung zu sein. Vorzugsweise also weist der Gabelschaft einen Innendurchmesser von mehr als 28,6 mm (1 1/8") und insbesondere mehr als 31,75 mm (1 1/4") auf. Wählt man einen Inndurchmesser für den Gabelschaft passend zu einen Außendurchmesser des Einsteckbereichs des Einsteckrohrs von 31,75 mm (1 1/4"), kann der obere, dünnere Klemmbereich des Einsteckrohrs mit einem Durchmesser von 1 1/8" (28,6 mm) ausgeführt werden, so dass dort ein handelsüblicher Ahead-Set-Vorbau mit 1 1/8 Zoll angeklemmt werden kann. Der Außendurchmesser des Gabelschafts kann dabei in besonders vorteilhafter Weise beispielsweise 38,1 mm (1 1/2") betragen und damit höchste Stabilität auch für sehr großen Beanspruchungen ausgesetzte Fahrzeuge gewährleisten, beispielsweise im Mountainbike Downhill-Bereich. Durch die Wahl größerer Durchmesser lässt sich die Stabilität nochmals verbessern. Dies lässt sich beispielsweise erreichen, wenn der Gabelschaft, bzw. das äußere Gabelschaftrohr, einen Außendurchmesser von 44,5 mm (1 3/4") aufweist und entsprechend einen größeren Innendurchmesser bei gleichbleibender oder im wesentlichen kleinerer Rohrdicke erhalten kann; gemäß einer noch weiter bevorzugten Ausgestaltung kann der Gabelschaft, bzw. das äußere Gabelschaftrohr, einen Außendurchmesser von mindestens 45,72 mm (1,8") erhalten, vorzugsweise genau 45,72 mm (1,8"). Hierdurch ergibt sich ein nochmals möglicher größerer Innendurchmesser des Gabelschafts und dementsprechend ein daran angepasster großer Außendurchmesser des Einsteckbereichs des Einsteckrohrs, so dass an dem Absatz der Durchmesser des Einsteckrohrs im Klemmbereich sogar größer sein kann als 1 1/4" (30,75 mm). Bei dieser großzügigen Dimensionierung lassen sich dann auch die Führungsteile kräftiger ausgestalten. Zugleich wird durch den im Innern des Gabelschafts gewonnenen zusätzlichen freien Bauraums ausreichend Platz geschaffen, um beispielsweise auch Kabel oder Leitungen durch das Lenkkopfrohr bzw. die Radgabel-Vorbau-Kombination, intern hindurchzuführen. Die Rohrdicken des Einsteckrohrs und/oder des Gabelschaftrohrs können vorzugweise im Bereich von 1 mm bis 3,5 mm Dicke liegen, bei den größeren Außendurchmessern des Gabelschafts insbesondere im Bereich von 1 mm bis 3mm, noch vorteilhafter im Bereich von 1,3 mm bis 2,2 mm. Das Vorsehen eines Gabelschafts mit einem Außendurchmesser von mindestens 38,1 mm (1 1/2"), vorzugsweise sogar 45,72 mm (1,8") an einem Fahrrad ist von eigenständiger erfinderischer Bedeutung auch bei einem einfachen Gabelschaft ohne die Anordnung von Stützschaft und Einsteckrohr im Innern des Gabelschafts.

Um die Axialbeweglichkeit der ineinander gesteckten Rohre der Lenker-Gabelbaugruppe bei offener Verriegelungseinrichtung zu verbessern und zugleich einen möglichst spielfreien Sitz des Einsteckrohrs im Gabelschaft zu gewährleisten, hat sich eine Konstruktion als vorteilhaft erwiesen, bei der mindestens ein Axialgleit- oder Wälzlagerelement zwischen dem Stützschaft und dem dieses umfassenden Einsteckrohr und/oder zwischen dem Gabelschaft und dem in dieses eingesteckten Einsteckrohr angeordnet ist. Als Axialgleitelemente eigenen sich beispielsweise Kunststoff- oder Bronzelagerhülsen, die in umfangsseitig am Stützschaft vorgesehene Aufnahmenuten formschlüssig eingelegt sind. Als Wälzlagerelemente können Wälzlagerkugeln vorgesehen sein, die in passenden, am Außenumfang des Stützschafts vorgesehenen Kugelkalotten aufgenommen sind, so dass sie sich an der Rohrinnenseite des Einsteckrohrs abwälzen, wenn dieses im Gabelschaft oder unten bewegt wird.

Weitere Merkmale und Vorteile der Erfindung ergeben sich aus der nachfolgenden Beschreibung und der Zeichnung, worin eine bevorzugte Ausführungsform der Erfindung anhand eines Beispiels näher erläutert wird. Es zeigt:
- Fig. 1: eine erste Ausführungsform der Lenkervorbau-Einheit für ein Fahrzeug nach der Erfindung in einer perspektivischen Darstellung;
- Fig. 2: den Gegenstand der Fig. 1 im Vertikalschnitt;
- Fig. 3: den Gegenstand der Fig. 2 in einem Horizontalschnitt längs der Linie III-III;
- Fig. 4: eine zweite, bevorzugte Ausführungsform der erfindungsgemäßen Lenker-Vorbau-Einheit in einem eingeschobenen Zustand für ein Fahrzeug nach der Erfindung im Vertikalschnitt; und
- Fig. 5: den Gegenstand der Fig. 4 im ausgezogenen Zustand des Einsteckrohrs im Vertikalschnitt, unter Weglassung des unteren Bereiches.

Die in der Zeichnung in ihrer Gesamtheit mit 10 bezeichnete Lenker-vorbau-Einheit gehört zu einem Fahrrad oder einem anderen zwei- oder dreirädrigen Fahrzeug, von dem in der Zeichnung allerdings lediglich das vorne an einem Fahrzeugrahmen angeordnete Steuerrohr 11 dargestellt ist. Die Vorbau-Einheit ist an einer das Vorderrad (nicht dargestellt) des Fahrrads aufnehmenden Radgabel 12 montiert, die in bekannter Weise einen an einer Gabelbrücke 13 angeordneten, nach oben aufragenden Gabelschaft 14 aufweist, der von unten in das Steuerrohr 11 eingesteckt und in diesem mit einem oberen und einem unteren Steuersatzlager 15, 16 drehbar gelagert ist. Mit seinem oberen, also vom Fahrzeugrad abgewandten Ende 17 ragt der Gabelschaft 14 oben aus dem Steuerrohr 11 heraus. Eine oben am herausragenden Ende 17 des Gabelschafts 14 montierte Klemmeinrichtung 18 sorgt dafür, dass der Gabelschaft im Steuerrohr axial festgelegt ist und nicht nach unten wieder hinausgleiten kann. Hierzu ist die Klemmeinrichtung 18 mit einem ersten, unteren Klemmring 19 versehen, in dem von unten eine mit einer Durchlassbohrung für das obere Ende 17 des Gabelschafts 14 versehene Hohlschraube 20 eingeschraubt ist. Die Hohlschraube 20 stützt sich mit ihrem Anlagebund 20a auf der Oberseite des Innenrings des oberen Steuersatzlagers 15 ab, wobei durch Ein- und Ausschrauben der Hohlschraube 20 in/aus dem Klemmring 19 das Lagerspiel der Steuersatzlagerung 15, 16 eingestellt werden kann, wie dies bekannt ist. Der Klemmring 19 wird unter Zwischenlage des Gewindeabschnitts der Hohlschraube 20 mittels einer Innensechskantschraube 21 fest gegen die Außenseite des oberen Endes 17 des Gabelschafts 14 radial angepresst und hierdurch festgelegt.

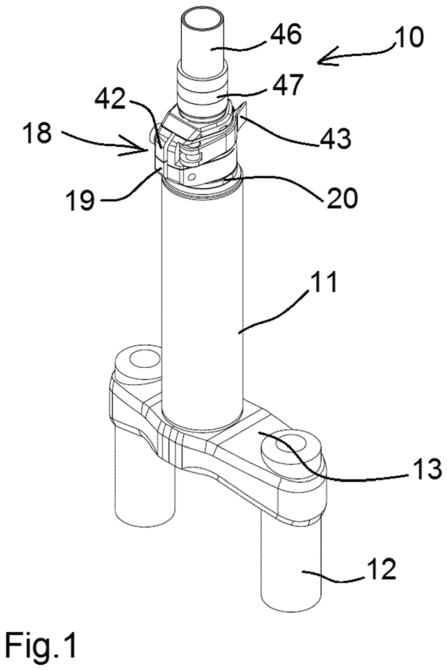

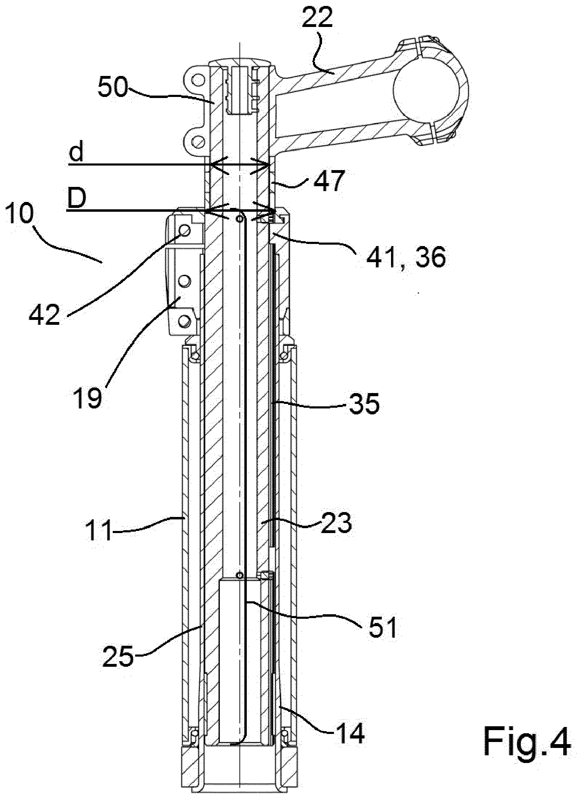

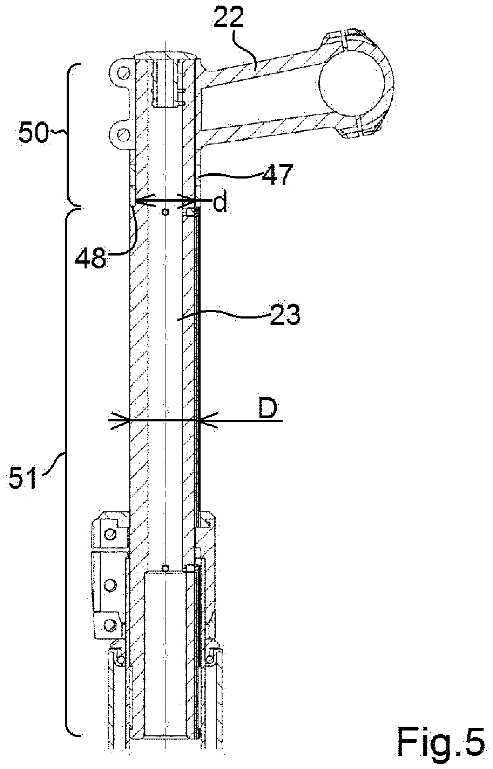

Die Lenkervorbau-Einheit 10 weist einen Lenkervorbau 22 (Fig. 4, 5) und ein daran angeordnetes Einsteckrohr 23 auf, das von oben in die Einstecköffnung 24 am oberen Ende 17 des Gabelschafts 14 eingeführt ist, wie dies bekannt ist. Dabei ist bei der ersten, in den Fig. 1 bis 3 gezeigten Konstruktion vorgesehen, dass der Gabelschaft 14 zusätzlich zu seinem äußeren Gabelschaftrohr 25 einen in dessen Inneren angeordneten, konzentrisch zum Gabelschaftrohr 25 verlaufenden Stützschaft 26 aufweist, der an den Innenquerschnitt des Einsteckrohrs 23 des Lenkervorbaus angepasst ist und somit in dieses abstützend einfasst.

Der Stützschaft 26 bei dem ersten Ausführungsbeispiel ist ebenfalls als Rohr ausgestaltet. Er ist an dem dem Fahrzeugrad zugewandten, also unteren Ende des Gabelschafts 14 konzentrisch zum äußeren Gabelschaftrohr 25 festgelegt und zu diesem Zweck mit einer Klemmanordnung 27 versehen, die einen radial aufweitbaren Klemmkörper 28 aufweist, der sich im geklemmten Zustand fest an die Innenwandung 29 des Gabelschaftrohrs 25 anpresst. Die radiale Aufweitung des Klemmkörpers 28 und damit dessen Anpressen innen am Gabelschaftrohr 25 erfolgt mittels zweier mit Kegelflächen versehenen Klemmbacken 30, 31. Die eine, obere Klemmbacke 30 ist an einem unten in den Stützschaft eingepressten oder eingeklebten Haltestopfen ausgebildet, während die zweite, untere Klemmbacke von einer runden Lochscheibe gebildet wird, die mit einer Schraube 32, die in ein Gewinde an dem Haltestopfen eingeschraubt werden kann, gegen die obere Klemmbacke 30 angestellt wird, so dass der radial aufweitbare Klemmkörper 28 von den an den beiden Klemmbacken 30, 31 ausgebildeten Kegelstumpfflächen nach außen gegen die Innenwandung 29 des äußeren Gabelschaftrohrs 25 gepresst wird.

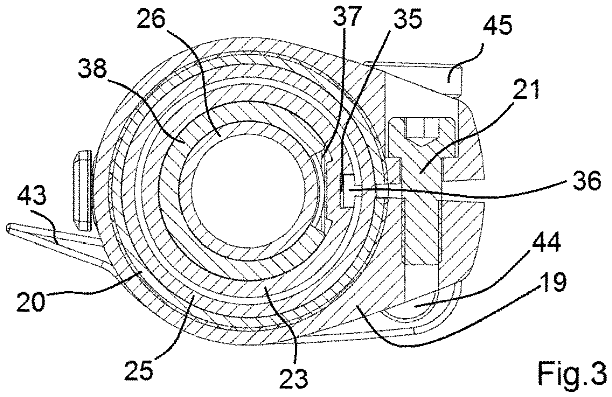

Man erkennt, dass das Einsteckrohr 23 des Lenkervorbaus 22 bei der ersten, in den Fig. 1 bis 3 gezeigten Ausführungsform in einem Ringspalt 34 zwischen dem inneren Stützschaft 26 und dem äußeren Gabelschaftrohr 25 aufgenommen wird und somit vor allem durch die zusätzliche, innenseitige Abstützung eine besonders steife Verbindung zwischen Gabelschaft 14 und Vorbau 22 besteht. Die Beweglichkeit des in den Gabelschaft eingesteckten Einsteckrohrs quer zu dessen Längsachse ist durch den zusätzliche Stützschaft 26 auf ein Minimum beschränkt, die Konstruktion hat sich unter allen Fahrbedingungen als außergewöhnlich stabil erwiesen. Der Stützschaft 26 hat dabei eine Länge, die so bemessen ist, dass er aus dem äußeren Gabelschaftrohr 25 oben einige Millimeter herausragt. Das Einsteckrohr 23 ist an seiner Außenseite mit einer über seine gesamte Länge axial erstreckenden Führungsnut 35 versehen, in die ein oben an der Klemmeinrichtung 18 vorgesehener Gleitnocken 36 hineingreift. Das Einsteckrohr kann nur in einer solchen Position in den Gabelschaft eingeführt werden, in der der Gleitnocken 36 in die Führungsnut 35 einfasst, so, wie dies am besten in Fig. 3 erkennbar ist. Ein Verdrehen des Einsteckrohrs 23 im in den Gabelschaft 14 eingesteckten Zustand ist dadurch wirksam unterbunden.

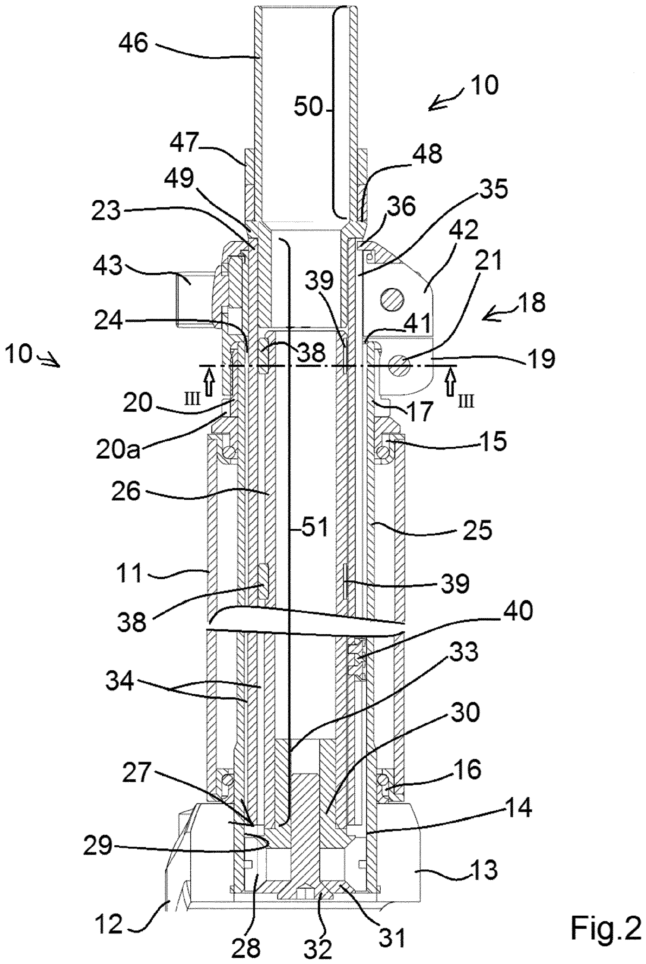

In Fig. 2 kann man gut erkennen, dass am Stützschaft 26 in der Nähe von dessen oberen Ende und in einem Abstand darunter zwei Axialgleitlager 38 in umlaufenden Nuten 39 eingebaut sind, die bei dem Ausführungsbeispiel aus stabilem Lagerkunststoff bestehen und an denen das Einsteckrohr 23 spielfrei entlanggleiten kann, wenn es aus dem Gabelschaft herauszogen oder in diesen hineingesteckt wird. Im Bereich der am Einsteckrohr 23 ausgebildeten Führungsnut 35, die durch radiales Einziehen der Rohrwandung des ansonsten einen kreisringförmigen Querschnitt aufweisenden Einsteckrohrs 23 gebildet ist, sind die Gleitlager 38 mit einer angepassten Aussparung 37 für die die Nut begrenzende, u-förmige Einziehung versehen (Fig.3). Ein zu weites Herausziehen des Einsteckrohrs aus dem Gabelschaft wird mit Hilfe eines im Nutgrund der Führungsnut 35 des Einsteckrohrs 23 angeschraubten Anschlags 40 verhindert, der beim Herausziehen des Einsteckrohrs 23 aus dem Gabelschaft 14 bei Erreichen der maximal erlaubten Ausziehlänge an einem an der Klemmeinrichtung 18 vorgesehenen Gegenanschlag 41 zur Anlage kommt, solange diese Klemmeinrichtung fest am oberen Ende des Gabelschafts mit dem ersten, unteren Klemmring 19 festgelegt ist. Die Position des Anschlags 40 an der Außenseite des Einsteckrohrs 23 ist dabei so gewählt, dass bei Erreichen seiner Anschlagposition am Gegenanschlag 41 das unterhalb des Anschlags 40 befindliche Teilstück des Einsteckrohrs 23 so lang ist, dass es in keinem Fall den Kontakt zu dem unteren der beiden Axialgleitlager 38 verliert.

Zur Arretierung des Einsteckrohrs 23 im Gabelschaft in unterschiedlichen, frei wählbaren Positionen ist die Klemmeinrichtung 18 mit einem zweiten, oberen Klemmring 42 versehen, der mit dem unteren, fest am oberen Ende 17 des Gabelschafts 14 angeklemmten, ersten Klemmring 19 einstückig verbunden ist. Mittels eines von einem Hebel 43 betätigbaren Klemmexzenters 44 kann der obere, zweite Klemmring fest an dem Einsteckrohr 23 an einer Stelle radial angeklemmt werden, die sich unmittelbar oberhalb des oberen Endes 17 des Gabelschafts 14 befindet, wozu der Hebel in die Fig. 3 gezeigte, geschlossen Stellung gebracht wird. Die erzeugte Klemmwirkung kann dabei mittels einer Einstellmutter 45 eingestellt werden, wie dies bei derartigen Schnellspannverschlüssen bekannt ist. Die einerseits mittels des ersten, unteren Klemmrings 19 am oberen Ende des Gabelschafts 14 und andererseits mittels des zweiten, oberen Klemmrings 42 am Einsteckrohr des Vorbaus angeklemmte Klemmvorrichtung bewirkt also die feste Verbindung der beiden Komponenten der erfindungsgemä-ßen Kombination miteinander.

Bei dem ersten Ausführungsbeispiel gemäß den Fig. 1 bis 3 ist der den Lenker tragende, vor die Lenkachse vorragende Vorbau selbst nicht gezeigt, sondern es ist lediglich ein oberes Montageende 46 für den Vorbaukragarm dargestellt, der - wie bei dem zweiten Ausführungsbeispiel gemäß Fig. 4 und 5 gezeigt - mittels einer Klemmmanschette an dem oberen Montageende 46 angeklemmt werden kann, gegebenenfalls unter Zwischenlage von einem oder mehreren Distanzringen 47, die zuvor auf das Montageende 46 aufgesteckt werden können, wie dies in Fig. 2 bzw. den Fig. 4 und 5 gezeigt ist. Bei beiden Ausführungsbeispielen hat der Gabelschaft in besonders vorteilhafter Weise einen im Fahrradbereich bislang noch nicht zum Einsatz gekommenen, großen Außendurchmesser von 38,1 mm (1 1/2"), oder von 44,5 mm (1 3/4")oder in noch vorteilhafterer Weise von 45,72 mm (1,8"). Bei einer maximalen Rohrdicke von 3 mm oder weniger, vorzugsweise weniger als etwa 2,5 mm, beträgt dann der Innendurchmesser des das Erscheinungsbild des Gabelschafts maßgeblich prägenden, äußeren Gabelschaftrohrs mindestens 40 mm. Aufgrund der großen, zum Einsatz kommenden Rohrquerschnitte sowohl des äußeren Gabelschaftrohrs 25 als auch des darin einfassenden Einsteckrohrs 23 und ggf. des wiederum in dieses einfassenden Stützschafts 26 hat sich die gesamte Vorbau-Gabelkombination als verbindungssteif und auch sonst in jeder Hinsicht stabil erwiesen.

In den Schnittdarstellungen gemäß den Fig. 2, 4 und 5 ist gut zu erkennen, dass an dem Einsteckrohr 23 der Vorbaueinheit 10 an dessen oberen, aus dem Gabelschaft 14 herausragenden Ende ein Absatz 48 ausgebildet ist, mit dem der Übergang zu dem oberen Montageende 46 für dem Vorbaus gestuft ausgestaltet ist. Dabei wird der Absatz 48 bei der ersten Ausführungsform von einem sich nach unten leicht konisch verjüngenden Kragen 49 am unteren Bereich des Montageendes 46 gebildet, das mit einer Presspassung in das Einsteckrohr 23 drehfest eingepresst und/oder darin eingeklebt oder anderweitig gesichert ist. Oberhalb des Absatzes 48 ist ein oberer Klemmbereich 50 mit kleinerem Außendurchmesser d zum Anklemmen des (nur bei der Ausführungsform gem. Fig. 4 und 5 gezeigten) Klemm-Vorbaus 22 ausgebildet, während der Einsteckbereich 51 unterhalb des Absatzes 48 einen Durchmesser D hat, der größer ist als der Durchmesser d des Klemmbereichs 50. Dabei ist die Anordnung so getroffen, dass der Außendurchmesser d des Klemmbereichs 50 an den Innenquerschnitt der Distanzringe 47 und der Klemmschelle des Klemm-Vorbaus 22 angepasst ist, während der unmittelbar unterhalb des Absatzes 48 zu findende größere Außendurchmesser am oberen Ende des konischen Kragens 49 an den Außenquerschnitt der Distanzringe angepasst ist, so dass zwischen diesen und dem Kragen 49 äußerlich keine sichtbare Stufe ist. Bei der in den Fig. 4 und 5 gezeigten, bevorzugten zweiten Ausführungsform hat das Einsteckrohr im Wesentlichen über seine gesamte Länge im Einsteckbereich 51 den größeren, eine besonders gute Stabilität gewährleistenden Durchmesser D. Dieser Außendurchmesser des Einsteckbereichs 51 beträgt bei dem Ausführungsbeispiel bevorzugt mindestens 31,75 mm (1 1/4") und insbesondere bevorzugt 38,1 mm (1 1/2"). Insbesondere für Fahrräder, die für besonders große Belastungen konzipiert sind, beispielsweise Mountainbikes für den Downhill-Sport, können auch noch größere Durchmesser gewählt werden. Bei alledem kann dann der Gabelschaft 14 bzw. das äußere Gabelschaftrohr 25 einen Außendurchmesser ≥ 44,5 mm (1 3/4") oder gar ≥ 45,7 mm (1,8") aufweisen. Bei der Ausführungsform gemäß den Fig. 4 und 5 wurde nicht zuletzt wegen des durchgehend großen Durchmessers D des Einsteckbereiches 51 des Einsteckrohrs 23 auf den bei der ersten Ausführungsform vorhandenen Stützschaft verzichtet.

Durch die erfindungsgemäße Gestaltung wird nicht nur optisch ein jedenfalls im Wesentlichen stufenloser Übergang zwischen dem Einsteckbereich 51 mit dem größeren Durchmesser des Einsteckrohrs und dem sich auf der Abstufung 48 abstützenden Distanzring 47 bzw. der Klemmschelle des Vorbaus 22 erhalten, sondern auch eine im Vergleich zu herkömmlichen Lenkervorbau-Einheiten größere Stabilität erreicht, indem man ein Einsteckrohr mit größerem Querschnitt durch die Anordnung des Absatzes 48 auch für herkömmliche Klemmvorbauten mit Standard-Klemmweiten von 1 1/8" oder 1 1/4" vorteilhaft nutzbar macht. Klemmvorbauten mit einem Klemmquerschnitt von vergleichsweise geringem Durchmesser, wie er bei der Erfindung nur in dem oberen Klemmbereich, also dem obersten Abschnitt des Einsteckrohrs, vorgesehen ist, lassen sich also ohne Nachteile und Probleme mit einem Einsteckrohr kombinieren, das aufgrund seines über die Länge des Einsteckbereichs realisierten großen Querschnitts besonders biegesteif ist und auch als ausziebare/höhenverstellbare Variante unter den auftretenden Fahrzuständen immer ausreichend stabil bleibt.

## Patentansprüche

1. Lenkervorbau-Einheit (10) für ein einen Fahrzeugrahmen mit einem Steuerrohr (11) sowie eine ein Fahrzeugrad tragende Radgabel (12) aufweisendes Fahrzeug, bei dem ein Gabelschaft (14) der Radgabel in dem Steuerrohr (11) drehbar gelagert ist und an seinem vom Fahrzeugrad abgewandten Ende (17) eine Einstecköffnung (24) zur Aufnahme eines an der Lenkervorbau-Einheit (10) angeordneten Einsteckrohrs (23) bildet, **dadurch gekennzeichnet, dass**
- das Einsteckrohr (23) der Vorbaueinheit (10) an seinem oberen, aus dem Gabelschaft (14) herausragenden Ende mit einem Absatz (48) gestuft ausgestaltet ist und oberhalb des Absatzes (48) einen oberen Klemmbereich (50) mit kleinerem Außendurchmesser (d) zum Anklemmen eines Klemm-Vorbaus (22) und unterhalb des Absatzes einen Einsteckbereich (51) mit einem größeren Durchmesser (D) als dem Durchmesser (d) des Klemmbereichs aufweist,
- wobei der Außendurchmesser (d) des Klemmbereichs (50) an den Innenquerschnitt des am oberen Klemmbereich angeklemmten Klemm-Vorbaus (22) oder eines etwa vorgesehenen Distanzrings (47) angepasst ist, und
- wobei ein unterhalb des Absatzes (48) ausgebildeter größerer Außendurchmesser (D) am oberen Ende des Einsteckbereichs (51) des Einsteckrohrs (23) an den Außenquerschnitt einer Klemmschelle des Klemm-Vorbaus (22) bzw. den Außendurchmesser des etwa vorhandenen Distanzrings (47) angepasst ist.

2. Lenkervorbau-Einheit nach Anspruch 1, **dadurch gekennzeichnet, dass** das Einsteckrohr (23) höhenverstellbar in dem Gabelschaft (14) angeordnet oder anordbar ist und mittels einer vorzugsweise im Bereich der Einstecköffnung (24) betätigbaren Verriegelungseinrichtung (42-45) in verschiedenen Einsteckpositionen im Gabelschaft (14) festlegbar ist.

3. Lenkervorbau-Einheit nach Anspruch 2, **dadurch gekennzeichnet, dass** die Verriegelungseinrichtung (42-45) einen vorzugsweise hebelbetätigten Schnellspannverschluss (43,44) sowie ein von diesem beaufschlagtes Klemmorgan (42) aufweist, das in einer Klemmposition den Gabelschaft (14) mit dem in diesem eingesteckten Einsteckrohr (23) fest miteinander verbindet.

4. Lenkervorbau-Einheit nach einem der vorhergehenden Ansprüche, **dadurch gekennzeichnet, dass** der Einsteckbereich (51) des Einsteckrohrs (23) einen Außendurchmesser ≥ 28,6 mm (1 1/8") und insbesondere ≥ 31,75 mm (1 1/4") und insbesondere bevorzugt ≥ 34 mm aufweist.

5. Fahrzeug, insbesondere Zweiradfahrzeug, mit einem an einem Fahrzeugrahmen angeordneten Steuerrohr (11) und einer einen Gabelschaft (14) aufweisenden, ein Fahrzeugrad aufnehmenden Radgabel (12), wobei der Gabelschaft (14) in dem Steuerrohr (11) drehbar gelagert ist und an seinem vom Fahrzeugrad abgewandten Ende (17) eine Einstecköffnung (24) zur Aufnahme des Einsteckrohrs (23) der Lenkervorbau-Einheit (22) nach einem der Ansprüche 1 bis 4 bildet.

6. Fahrzeug nach Anspruch 5, **dadurch gekennzeichnet, dass** der Gabelschaft (14) ein äußeres Gabelschaftrohr (25) und einen in dessen Inneren im Wesentlichen konzentrisch angeordneten Stützschaft (26) aufweist, der an den Innenquerschnitt des Einsteckrohrs (23) angepasst ist und in dieses abstützend einfasst.

7. Fahrzeug nach Anspruch 6, **gekennzeichnet durch** mindestens ein zwischen dem Stützschaft (26) und dem dieses umfassenden Einsteckrohr (23) und/oder zwischen dem Gabelschaft (14) und dem in dieses eingesteckte Einsteckrohr (23) angeordnetes Axialgleit- oder Wälzlagerelement (38).

8. Fahrzeug nach Anspruch 6 oder 7, **dadurch gekennzeichnet, dass** der Stützschaft (26) wenigstens über einen Teil seiner in das Einsteckrohr (23) einfassenden Länge oder die am Stützschaft (26) vorgesehenen Lagerelemente (38) einen äußeren unrunden Querschnitt aufweist/aufweisen und das Einsteckrohr (23) mit seinem Innenquerschnitt an den äußeren unrunden Querschnitt des Stützschafts (26) oder der Lagerelemente angepasst ist/sind.

9. Fahrzeug nach einem der vorhergehenden Ansprüche, **dadurch gekennzeichnet, dass** das Einsteckrohr (23) mit mindestens einer an seiner Außenseite vorgesehenen, sich in Axialrichtung erstreckenden Führungsnut (35) oder Führungsfläche versehen ist, die mit einem am Gabelschaft (14) unmittelbar oder mittelbar (18) angeordneten Gleitnocken (36) oder einer Gleitfläche (37) zusammenwirkt.

10. Fahrzeug nach einem der vorstehenden Ansprüche, **dadurch gekennzeichnet, dass** der Gabelschaft (14) einen an den Außendurchmesser des Einsteckbereichs angepassten Innendurchmesser aufweist und vorzugsweise einen Außendurchmesser von ≥ 38,1 mm (1 1/2") hat, oder dass der Gabelschaft (14) bzw. das äu-ßere Gabelschaftrohr (26) einen Außendurchmesser ≥ 44,5 mm (1 3/4") aufweist, oder dass der Gabelschaft (14)) bzw. das äu-ßere Gabelschaftrohr (26) einen Außendurchmesser ≥ 45,7 mm (1,8") aufweist.

## Claims

1. Handlebar stem unit (10) for a vehicle having a vehicle frame with a head tube (11) and a wheel fork (12) carrying a vehicle wheel, in which a fork stem (14) of the wheel fork is rotatably mounted in the head tube (11) and, at its end (17) facing away from the vehicle wheel, forms an insertion opening (24) to receive an insertion tube (23) arranged on the handlebar stem unit (10), **characterized in that**
- the insertion tube (23) of the stem unit (10) is configured so as to be stepped with a shoulder (48) at its upper end projecting out of the fork stem (14) and, above the shoulder (48), has an upper clamping region (50) with a smaller external diameter (d) for clamping a clamping stem (22) and, underneath the shoulder, has an insertion region (51) with a larger diameter (D) than the diameter (d) of the clamping region,
- wherein the external diameter (d) of the clamping region (50) is matched to the internal cross section of the clamping stem (22) clamped in the upper clamping region or a spacer ring (47) that may possibly be provided, and
wherein a larger external diameter (D) formed underneath the shoulder (48) at the upper end of the insertion region (51) of the insertion tube (23) is matched to the external cross section of a clamp of the clamping stem (22) or the external diameter of the spacer ring (47) that may be present.

2. Handlebar stem unit according to Claim 1, **characterized in that** the insertion tube (23) is or can be arranged vertically adjustably in the fork stem (14) and can be fixed in various insertion positions in the fork stem (14) by means of a locking device (42-45) that can preferably be actuated in the region of the insertion opening (24).

3. Handlebar stem unit according to Claim 2, **characterized in that** the locking device (42-45) has a preferably lever-operated quick-release closure (43, 44) and a clamping member (42) which is loaded by the latter and which, in a clamping position, connects the fork stem (14) and the insertion tube (23) inserted into the latter firmly to each other.

4. Handlebar stem unit according to one of the preceding claims, **characterized in that** the insertion region (51) of the insertion tube (23) has an external diameter ≥ 28.6 mm (1⅛") and in particular ≥ 31.75 mm (1¼") and in particular preferably ≥ 34 mm.

5. Vehicle, in particular two-wheeled vehicle, having a head tube (11) arranged on a vehicle frame and a wheel fork (12) receiving a vehicle wheel and having a fork stem (14), wherein the fork stem (14) is rotatably mounted in the head tube (11) and, at its end (17) facing away from the vehicle wheel, forms an insertion opening (24) to receive the insertion tube (23) of the handlebar stem unit (22) according to one of Claims 1 to 4.

6. Vehicle according to Claim 5, **characterized in that** the fork stem (14) has an external fork stem tube (25) and a support stem (26) arranged substantially concentrically in the interior of the latter, which is matched to the internal cross section of the insertion tube (23) and encloses therein in a supporting manner.

7. Vehicle according to Claim 6, **characterized by** at least one axial sliding or rolling bearing element (38) arranged between the support stem (26) and the insertion tube (23) enclosing the latter and/or between the fork stem (14) and the insertion tube (23) inserted into the latter.

8. Vehicle according to Claim 6 or 7, **characterized in that** at least over part of its length enclosed in the insertion tube (23) the support stem (26) or the bearing elements (38) provided on the support stem (26) has/have an external non-round cross section, and the internal cross section of the insertion tube (23) is matched to the external non-round cross section of the support stem (26) or the bearing elements.

9. Vehicle according to one of the preceding claims, **characterized in that** the insertion tube (23) is provided with at least one guide groove (35) or guide surface provided on its outer side and extending in the axial direction, which interacts with a sliding cam (36) or a sliding surface (37) arranged directly or indirectly (18) on the fork stem (14).

10. Vehicle according to one of the preceding claims, **characterized in that** the fork stem (14) has an internal diameter matched to the external diameter of the insertion region and preferably has an external diameter of ≥ 38.1 mm (1½), or **in that** the fork stem (14) or the external fork stem tube (26) has an external diameter ≥ 44.5 mm (1¾"), or **in that** the fork stem (14) or the external fork stem tube (26) has an external diameter ≥ 45.7 mm (1.8").

## Revendications

1. Unité (10) de potence de guidon pour un véhicule ayant un cadre de véhicule avec un tube de direction (11) ainsi qu'une fourche de roue (12) portant une roue de véhicule, une tige de fourche (14) de la fourche de roue étant logée de manière rotative dans le tube de direction (11) et formant à son extrémité (17) opposée à la roue de véhicule une ouverture d'insertion (24) pour recevoir un tube d'insertion (23) disposé sur l'unité (10) de potence de guidon, **caractérisée en ce que**
- le tube d'insertion (23) de l'unité de potence (10) est, à son extrémité supérieure dépassant de la tige de fourche (14), étagé avec un épaulement (48) et présente, au-dessus de l'épaulement (48), une zone de serrage supérieure (50) de plus petit diamètre (d) pour le serrage d'une potence à serrage (22), et, au-dessous de l'épaulement, une zone d'insertion (51) avec un diamètre (D) plus grand que le diamètre (d) de la zone de serrage,
- le diamètre extérieur (d) de la zone de serrage (50) étant adapté à la section intérieure de la potence de serrage (22) serrée sur la zone de serrage supérieure ou d'une bague d'écartement (47) optionnellement prévue, et
- un diamètre extérieur (D) plus grand formé en dessous de l'épaulement (48) à l'extrémité supérieure de la zone d'insertion (51) du tube d'insertion (23) étant adapté à la section extérieure d'un collier de serrage de la potence de serrage (22) ou au diamètre extérieur de la bague d'écartement (47) optionnellement prévue.

2. Unité de potence de guidon selon la revendication 1, **caractérisée en ce que** le tube d'insertion (23) est disposé ou peut être disposé de manière réglable en hauteur dans la tige de fourche (14) et peut être fixé dans différentes positions d'insertion dans la tige de fourche (14) au moyen d'un dispositif de verrouillage (42-45) apte à être actionné de préférence dans la zone de l'ouverture d'insertion (24).

3. Unité de potence de guidon selon la revendication 2, **caractérisée en ce que** le dispositif de verrouillage (42-45) présente une fermeture à serrage rapide (43, 44), de préférence actionnée par levier, ainsi qu'un organe de serrage (42) sollicité par celle-ci, qui, dans une position de serrage, relie fermement entre eux la tige de fourche (14) et le tube d'insertion (23) inséré dans celle-ci.

4. Unité de potence de guidon selon l'une des revendications précédentes, **caractérisée en ce que** la zone d'insertion (51) du tube d'insertion (23) présente un diamètre extérieur ≥ 28,6 mm (1 1/8") et notamment ≥ 31,75 mm (1 1/4") et de préférence ≥ 34 mm.

5. Véhicule, en particulier véhicule à deux roues, comprenant un tube de direction (11) disposé sur un cadre de véhicule et une fourche de roue (12) présentant une tige de fourche (14) et recevant une roue de véhicule, la tige de fourche (14) étant montée rotative dans le tube de direction (11) et formant à son extrémité (17) opposée à la roue de véhicule une ouverture d'insertion (24) pour recevoir le tube d'insertion (23) de l'unité (22) de potence de guidon selon l'une des revendications 1 à 4.

6. Véhicule selon la revendication 5, **caractérisé en ce que** la tige de fourche (14) comporte un tube extérieur (25) de tige de fourche et une tige d'appui (26) disposée sensiblement concentriquement à l'intérieur de celui-ci, adaptée à la section intérieure du tube d'insertion (23) et enserrée dans celui-ci en prenant appui.

7. Véhicule selon la revendication 6, **caractérisé par** au moins un élément de glissement axial ou de roulement (38) disposé entre la tige d'appui (26) et le tube d'insertion (23) qui l'entoure et/ou entre la tige de fourche (14) et le tube d'insertion (23) inséré dans celui-ci.

8. Véhicule selon la revendication 6 ou 7, **caractérisé en ce que** la tige de support (26) présente, au moins sur une partie de sa longueur s'engageant dans le tube d'insertion (23), ou les éléments de roulement (38) prévus sur la tige de support (26) présentent, une section transversale extérieure non circulaire, et le tube d'insertion (23) est/sont adapté(s) par sa section transversale intérieure à la section transversale extérieure non circulaire de la tige de support (26) ou des éléments de roulement.

9. Véhicule selon l'une des revendications précédentes, **caractérisé en ce que** le tube d'insertion (23) est pourvu d'au moins une rainure de guidage (35) ou surface de guidage qui est prévue sur sa face extérieure et s'étend dans la direction axiale, qui coopère avec une came de glissement (36) ou une surface de glissement (37) disposée directement ou indirectement (18) sur la tige de fourche (14).

10. Véhicule selon l'une des revendications précédentes, **caractérisé en ce que** la tige de fourche (14) présente un diamètre intérieur adapté au diamètre extérieur de la zone d'insertion et a de préférence un diamètre extérieur ≥ 38,1 mm (1 1/2"), ou **en ce que** la tige de fourche (14) ou le tube extérieur (26) de tige de fourche présente un diamètre extérieur ≥ 44,5 mm (1 3/4"), ou la tige de fourche (14) ou **en ce que** le tube extérieur (26) de la tige de fourche présente un diamètre extérieur ≥ 45,7 mm (1,8") .
